# EUROPÄISCHE PATENTSCHRIFT

(11) **EP 3 009 993 B1**
(45) Veröffentlichungstag und Bekanntmachung des Hinweises auf die Patenterteilung: **19.12.2018**
(21) Anmeldenummer: 14188798.4
(22) Anmeldetag: 14.10.2014
(51) Int. Cl.: G07C 9/02, B61B 11/00, G06Q 10/00, B61B 1/02, B61B 12/02

(54) **Verfahren und System zur Erhöhung der Sicherheit im Einsteigebereich und zur Optimierung der Ausnutzung der Kapazität bei Transportmitteln, welche zumindest einen örtlich festgelegten Einsteigebereich aufweisen**
Method and system for increasing the safety in the entry area and optimising the usage of the capacity of means of transport, comprising at least one spatially fixed entry area
Procédé et dispositif d'augmentation de la sécurité dans une zone d'accès et d'optimisation de l'utilisation de la capacité dans des moyens de transport présentant au moins une zone d'accès définie localement

(43) Veröffentlichungstag der Anmeldung: 20.04.2016
(73) Patentinhaber: SKIDATA AG, 5083 Grödig/Salzburg (AT)
(72) Erfinder: Kobler, Richard, 5301 Eugendorf (AT); Hulan, Thomas, 5204 Strasswalchen (AT)
(74) Vertreter: Karakatsanis, Georgios

(56) Entgegenhaltungen:
- WO-A1-2013/144850
- WO-A2-2006/018304
- FR-A1- 2 678 571
- US-A- 5 176 082
- US-A- 5 485 347
- US-A1- 2012 245 769

## Beschreibung

Die vorliegende Erfindung bezieht sich auf ein Verfahren zur Erhöhung der Sicherheit im Einsteigebereich und zur Optimierung der Ausnutzung der Kapazität bei Transportmitteln, welche zumindest einen örtlich festgelegten Einsteigebereich aufweisen. Ferner bezieht sich die Erfindung auf ein System zur Erhöhung der Sicherheit im Einsteigebereich und zur Optimierung der Ausnutzung der Kapazität bei Transportmitteln, welche zumindest einen örtlich festgelegten Einsteigebereich aufweisen, insbesondere zur Durchführung des erfindungsgemäßen Verfahrens.

Aus dem Stand der Technik ist bekannt, bei Transportmitteln, welche zumindest einen örtlich festgelegten Einsteigebereich aufweisen, wie beispielsweise bei Gondelbahnen in Skigebieten, die erforderlichen Zugangskontrollvorrichtungen vor dem Einsteigebereich anzuordnen, wobei die zu transportierenden Personen nach der Kontrolle der Zugangsberechtigung im Einsteigebereich auf die ankommenden Transportmittel warten, um anschließend einzusteigen.

Dies resultiert jedoch, insbesondere zu Stoßzeiten, in Komforteinbußen, da sich viele Personen in einem begrenzten Raum aufhalten. Dies kann in nachteiliger Weise auch zu Unfällen führen, da sich zu viele Personen in der Nähe der ankommenden Transportmittel befinden; ferner kann es beim Einsteigen ebenfalls zu Unfällen kommen, wenn viele Personen gleichzeitig in ein Transportmittel einsteigen wollen.

Ein weiterer Nachteil besteht darin, dass in der Regel auch zu Stoßzeiten Transportmittel mit leeren Plätzen fahren, da Personengruppen, die sich unmittelbar vor der Tür des Transportmittels befinden, gemeinsam transportiert werden wollen und die im Transportmittel zur Verfügung stehenden freien Plätze nicht ausreichen. Insbesondere bei getaktet fahrenden Transportmitteln fährt das Transportmittel weiter, ohne die Kapazität ausgeschöpft zu haben.

Des Weiteren kann es zu Stoßzeiten, beispielsweise in Skigebieten, bei Transportmitteln mit einer oder mehreren Zwischenstationen zwischen Anfangs- und Endstation dazu kommen, dass die Wartezeiten für die Passagiere, die in einer Zwischenstation einsteigen wollen, sehr lang sind, wenn die Transportmittel voll beladen ankommen.

Zudem sind hohe Personalressourcen erforderlich, um insbesondere zu Stoßzeiten die Einsteigebereiche zu überwachen, um für den Fall eines Unfalls oder einer Unregelmäßigkeit beim Einsteigen den Betrieb der Transportmittel zu unterbrechen.

Die Schrift FR 2 678 571 offenbart ein Verfahren und System zur Erhöhung der Sicherheit im Einsteigebereich eines Sessellifts und zur Optimierung der Ausnutzung der Kapazität dieses Sessellifts, wobei der Sessellift einen örtlich festgelegten Einsteigebereich aufweist, der in mehreren nacheinander geschalteten Schleusen aufgeteilt ist und wobei nur eine Schleuse einen direkten Zugang zum Sessellift aufweist. Eine Überholspur zur Optimierung der Ausnutzung der Sesselliftkapazität ist vorgesehen.

Der vorliegenden Erfindung liegt die Aufgabe zugrunde, ein Verfahren zur Erhöhung der Sicherheit im Einsteigebereich und zur Optimierung der Ausnutzung der Kapazität bei Transportmitteln, welche zumindest einen örtlich festgelegten Einsteigebereich aufweisen, anzugeben, durch dessen Durchführung die aus dem Stand der Technik bekannten Nachteile vermieden werden. Diese Aufgabe wird durch die Merkmale des Patentanspruchs 1 gelöst. Des Weiteren soll ein System zur Erhöhung der Sicherheit im Einsteigebereich und zur Optimierung der Ausnutzung der Kapazität bei Transportmitteln, welche zumindest einen örtlich festgelegten Einsteigebereich aufweisen, zur Durchführung des erfindungsgemäßen Verfahrens angegeben werden. Diese Aufgabe wird durch die Merkmale des Patentanspruchs 7 gelöst. Weitere Ausgestaltungen und Vorteile gehen aus den entsprechenden Unteransprüchen hervor.

Demnach wird ein Verfahren zur Erhöhung der Sicherheit im Einsteigebereich und zur Optimierung der Ausnutzung der Kapazität bei Transportmitteln, welche zumindest einen örtlich festgelegten Einsteigebereich aufweisen, vorgeschlagen, im Rahmen dessen der Einsteigebereich in zumindest zwei Schleusen unterteilt wird, welche jeweils einen direkten Zugang zum Transportmittel aufweisen und deren maximale Personenkapazität jeweils der maximalen Kapazität des größten Transportmittels entspricht, das über den Einsteigebereich betretbar ist, wobei der Eintritt in die Schleusen jeweils über zumindest eine Vereinzelungsvorrichtung erfolgt, wobei kein Zutritt in die Schleuse möglich ist, wenn eine für den aktuellen Einsteigevorgang vorgegebene Personenanzahl in der Schleuse erreicht ist oder während die in der Schleuse befindlichen Personen in ein Transportmittel einsteigen, wobei die vorgegebene Personenanzahl in der Schleuse in Abhängigkeit der Transportnachfrage in nachfolgenden Zwischenstationen vor der Endstation, falls vorhanden, und der freien Kapazität der ankommenden Transportmittel von einem Steuersystem bestimmt wird und wobei die Personen in einer Schleuse einem ankommenden Transportmittel zugeordnet werden.

Die vorgegebene Personenanzahl für den aktuellen Einsteigevorgang kann der maximalen Personenkapazität einer Schleuse entsprechen, z.B. dann, wenn das ankommende Transportmittel die gleiche Kapazität hat und leer ist und keine Zwischenstation vor der Endstation vorgesehen ist. Für den Fall, dass die Transportmittel Gondeln eines Fahrgeschäftes oder Gondeln einer Bahn mit einer Anfangs- und einer Endstation ohne Zwischenstationen sind, entspricht die vorgegebene Personenanzahl der maximalen Personenkapazität einer Schleuse, die wiederum der Kapazität einer Gondel entspricht.

Die aktuelle Anzahl der sich in einer Schleuse befindenden Personen wird über die zumindest eine Vereinzelungsvorrichtung erfasst und an das Steuersystem weitergeleitet, wobei, wenn die für den aktuellen Einsteigevorgang vorgegebene Personenanzahl in der Schleuse erreicht ist oder ein vorgegebener Timer, der einem vorgegebenen Zeitfenster entspricht, abgelaufen ist und ein Transportmittel ankommt, dem die aktuell in der Schleuse befindlichen Personen zugeordnet sind, die Personen, die sich in der Schleuse befinden, zum Einsteigen aufgefordert werden und ein Zähler für die Personenanzahl in der Schleuse auf Null gesetzt wird.

Der dem Einsteigebereich zugewandte Bereich der Schleusen ist vorzugsweise offen. Alternativ kann am dem Einsteigebereich zugewandten Bereich der Schleusen eine geeignete Vorrichtung, beispielsweise eine mit dem Steuersystem zum Zweck der Datenkommunikation verbundene Schranke vorgesehen sein, die im Öffnungssinne betätigt den Zugang zu einem Transportmittel freigibt, wenn die in einer Schleuse befindlichen Personen zum Einsteigen aufgefordert werden. Die Aufforderung zum Einsteigen kann über eine Anzeigevorrichtung und/oder akustisch erfolgen.

Die Vereinzelungsvorrichtungen können im Rahmen einer Weiterbildung der Erfindung auch als Zugangskontrollvorrichtungen für die Transportmittel dienen, wodurch die Kosten und der Wartungsaufwand reduziert werden, da die Notwendigkeit separater Zugangskontrollvorrichtungen entfällt.

Die Schleusen umfassen jeweils eine den den Zutritt in die Schleusen ersuchenden Personen zugewandte und mit dem Steuersystem zum Zweck der Datenkommunikation verbundene Anzeigevorrichtung, welche in Echtzeit die Anzahl der für den aktuellen Einsteigevorgang noch freien Plätze bezogen auf die vorgegebene Personenanzahl in der Schleuse anzeigt. Ferner umfassen die Schleusen jeweils eine den in der Schleuse befindlichen Personen zugewandte und mit dem Steuersystem zum Zweck der Datenkommunikation verbundene Anzeigevorrichtung, die anzeigt, ob noch auf den Einsteigevorgang gewartet werden muss oder ob der Einsteigevorgang begonnen hat, wobei diese Informationen beispielsweise durch Piktogramme oder über eine Ampel angezeigt werden können. Alternativ oder zusätzlich zur Anzeige des Status des Einsteigevorgangs kann dies auch über akustische Signale erfolgen.

Im Rahmen einer weiteren Ausgestaltung weist jede Schleuse lediglich eine den in der Schleuse befindlichen Personen und den den Zutritt in die Schleusen ersuchenden Personen zugewandte, mit dem Steuersystem zum Zweck der Datenkommunikation verbundene Anzeigevorrichtung auf, die zum einen in Echtzeit die Anzahl der für den aktuellen Einsteigevorgang noch freien Plätze bezogen auf die vorgegebene Personenanzahl in der Schleuse und zum anderen den Status des Einsteigevorgangs (z.B. Warten/Einsteigen) anzeigt.

Durch die mittels der Anzeigevorrichtungen angezeigte Information ist vor dem Zutritt erkennbar, ob z.B. eine Familie oder Personengruppe noch ausreichend Platz findet und gemeinsam in einem der nächsten Transportmittel fahren kann, oder anderen den Vortritt lassen soll und auf den Zutritt in eine weitere Schleuse oder in dieselbe Schleuse zu einem späteren Zeitpunkt warten soll, damit alle im selben Transportmittel fahren können. Diese Verlagerung der Zuordnung ins Vorfeld und weg vom Einsteigebereich macht die Suche nach einem Transportmittel obsolet und reduziert den Stress. Das erfindungsgemäße Verfahren führt zu direkten geraden Bewegungsmustern im Bereich des Einstiegs und vermeidet kreuzende Verkehrsströme.

Die Transportmittel weisen jeweils eine eineindeutige, für die Personen am Einsteigebereich deutlich sichtbare Identifikationsnummer oder sonstige Bezeichnung auf, wobei die in einer Schleuse wartenden Passagiere über die Anzeigevorrichtung und/oder über akustische Signale entweder zum Warten oder zum Einsteigen in ein Transportmittel mit einer vorgegebenen Identifikationsnummer aufgefordert werden.

Die freie Kapazität und Ankunftszeit eines Transportmittels wird im Steuersystem anhand der eineindeutigen, für die Personen am Einsteigebereich deutlich sichtbaren Identifikationsnummer oder sonstigen Bezeichnung und der Anzahl der Personen die sich in das Transportmittel befinden, die anhand der Daten der Vereinzelungsvorrichtungen der Schleusen für den Einsteigevorgang in das Transportmittel ermittelt wird, ausgewertet, um in Abhängigkeit der Transportnachfrage in nachfolgenden Zwischenstationen vor einer Endstation, falls Zwischenstationen vorhanden sind, für einen aktuellen Einsteigevorgang in einem Einsteigebereich eine Schleuse und die vorgegebene Personenanzahl darin zu bestimmen und die Personen in dieser Schleuse einem ankommenden Transportmittel zuzuordnen.

Für den Fall, dass außer einer Anfangs- und einer Endstation zumindest eine Zwischenstation vorhanden ist, wird die Anzahl der in den unterschiedlichen Stationen wartenden Personen vor Erreichen der Schleusen mittels vor den Schleusen angeordneter Vorrichtungen zur Ermittlung der Anzahl der vor den Schleusen auf den Transport wartenden Personen, die z.B. auch als Zugangskontrollvorrichtungen dienen können oder als Lichtschranken ausgeführt sind und die mit dem Steuersystem zum Zweck der Datenkommunikation verbunden sind, ermittelt, so dass im Steuersystem die Transportnachfrage in den einzelnen Stationen in Echtzeit bekannt ist.

Hierbei wird anhand der Anzahl der von diesen Vorrichtungen erfassten vor den Schleusen eines Einsteigebereiches ankommenden Personen und der Anzahl der von den Vereinzelungsvorrichtungen der Schleusen des Einsteigebereiches erfassten Personen (die der Anzahl der bereits transportierten bzw. unmittelbar zu transportierenden Personen entspricht) die Anzahl der in den unterschiedlichen Stationen wartenden Personen vor Erreichen der Schleusen ermittelt. Diese Daten werden in Echtzeit mit dem Stand aller aktuell zur Verfügung stehenden freien Kapazitäten der Transportmittel im Steuersystem ausgewertet. Anhand dieser Daten wird die Steuerung der Schleusen in den einzelnen Stationen optimiert, wobei durch die umfassende Erfassung der Passagierströme in allen Stationen der Beladungsfaktor in den einzelnen Transportmitteln in Echtzeit abrufbar ist.

Alternativ zur Ermittlung der Anzahl der ankommenden Personen und zur Berechnung der Anzahl der wartenden Personen anhand der ankommenden und der bereits transportierten Personen kann die Anzahl der in den unterschiedlichen Stationen wartenden Personen in Echtzeit anhand der Auswertung von Kamerabildern ermittelt werden.

Gemäß der Erfindung sind pro Einsteigebereich mindestens zwei Schleusen vorgesehen, wobei je mehr Schleusen vorgesehen sind, desto mehr Möglichkeiten zur flexiblen Steuerung der Einsteigevorgänge gegeben sind. Beispielsweise kann für eine vorgegebene Zeitspanne eine der Schleusen für Personen mit Kindern, für Frauen, für Fahrten zu bestimmten Stationen, für VIP's oder als Fast Lane verwendet werden.

Das erfindungsgemäße Verfahren kann bei getaktet oder ungetaktet fahrenden Transportmitteln, bei Fahrgeschäften, oder auch bei Fahrstühlen von Hochhäusern durchgeführt werden.

Das erfindungsgemäße System zur Erhöhung der Sicherheit im Einsteigebereich und zur Optimierung der Ausnutzung der Kapazität bei Transportmitteln, welche zumindest einen örtlich festgelegten Einsteigebereich aufweisen, umfasst im Rahmen einer besonders vorteilhaften Ausführungsform pro Einsteigebereich eines Transportmittels zumindest zwei Schleusen, welche jeweils einen direkten Zugang zum Transportmittel aufweisen und deren maximale Personenkapazität jeweils der maximalen Kapazität des größten Transportmittels entspricht, das über den Einsteigebereich betretbar ist, wobei die Schleusen jeweils zumindest eine mit einem Steuersystem des erfindungsgemäßen Systems zum Zweck der Datenkommunikation verbundene Vereinzelungsvorrichtung umfassen, über die der Zutritt in die Schleuse erfolgt und die die aktuelle Anzahl der sich in einer Schleuse befindenden Personen erfasst und an das Steuersystem weiterleitet. Hierbei ist kein Zutritt in eine Schleuse möglich, wenn eine für den aktuellen Einsteigevorgang von dem Steuersystem vorgegebene Personenanzahl in der Schleuse erreicht ist, wobei die für den aktuellen Einsteigevorgang vorgegebene Personenanzahl in einer Schleuse in Abhängigkeit der Transportnachfrage in nachfolgenden Zwischenstationen vor einer Endstation, falls Zwischenstationen vorhanden sind, und der freien Kapazität der ankommenden Transportmittel von dem Steuersystem bestimmt wird, wobei die Schleusen jeweils eine mit dem Steuersystem zum Zweck der Datenkommunikation verbundene Anzeigevorrichtung aufweisen, über die die Anzahl der für den aktuellen Einsteigevorgang noch freien Plätze bezogen auf die vorgegebene Personenanzahl in einer Schleuse und der Status des Einsteigevorgangs angezeigt werden, wobei die in einer Schleuse wartenden Passagiere über die Anzeigevorrichtung entweder zum Warten oder zum Einsteigen aufgefordert werden.

Wie bereits erläutert, können die Vereinzelungsvorrichtungen des Systems auch als Zugangskontrollvorrichtungen für die Transportmittel dienen.

Für den Fall, dass außer einer Anfangs- und einer Endstation zumindest eine Zwischenstation vorhanden ist, umfasst das System zur Ermittlung der Anzahl der vor den Schleusen wartenden Personen mit dem Steuersystem zum Zweck der Datenkommunikation verbundene Vorrichtungen, welche die Anzahl der vor den Schleusen ankommenden Personen erfassen, wobei anhand der Anzahl der ankommenden Personen und der Anzahl der von den Vereinzelungsvorrichtungen der Schleusen erfassten Personen, die der Anzahl der bereits transportierten bzw. unmittelbar zu transportierenden Personen entspricht, im Steuersystem die Anzahl der in den unterschiedlichen Stationen wartenden Personen vor Erreichen der Schleusen in Echtzeit ermittelt wird. Die Vorrichtungen zur Ermittlung der Anzahl der vor den Schleusen wartenden Personen können als Zugangskontrollvorrichtungen, Lichtschranken oder Kameras ausgeführt sein.

Durch die erfindungsgemäße Konzeption wird gewährleistet, dass die begrenzte Anzahl der sich im Einsteigebereich befindlichen Personen einen stressfreien, sicheren und komfortablen Einstieg zur Folge hat. Zudem wird für die Sicherheit erhöht, da eine Regulierung erfolgt, wie viele Personen sich maximal im Einsteigebereich aufhalten. Somit ist für den Evakuierungsfall z.B. Feueralarm ein rasches Räumen der Station gewährleistet.

Des Weiteren werden die Kapazitäten der Transportmittel optimal ausgenutzt, da die Transportmittel innerhalb eines vorgegebenen Zeitfensters mit der optimierten Anzahl an Personen starten, unter Berücksichtigung der Personen, die auf dieses Transportmittel in einer nächsten Station, falls vorhanden, warten. Dadurch können die Personalressourcen, die im Einsteigebereich tätig werden, reduziert werden, so dass Kapazitäten für weitere Tätigkeiten zur Verfügung stehen. Das erfindungsgemäße Verfahren zeichnet sich durch den vollautomatischen Ansatz aus, der durch die intuitive Steuerung der Passagierströme eine Reduktion des Personaleinsatzes auf das vorgeschriebene Mindestmaß ermöglicht, ohne dabei bei getaktet fahrenden Transportmitteln die Anlagengeschwindigkeit reduzieren zu müssen.

Die Erfindung wird im Folgenden anhand der beigefügten Figuren beispielhaft näher erläutert. Es zeigen:
Fig. 1: eine schematische Darstellung der erfindungsgemäß vorgesehenen Schleusen für die Einsteigebereiche von drei Stationen;
Fig. 2: eine schematische Darstellung einer Schleuse gemäß der Erfindung; und
Fig.3: eine schematische Darstellung der Ausgestaltung des Einsteigebereiches A der in Figur 1 gezeigten Anfangsstation für den Fall einer Gondelbahn zur Veranschaulichung des erfindungsgemäßen Verfahrens.

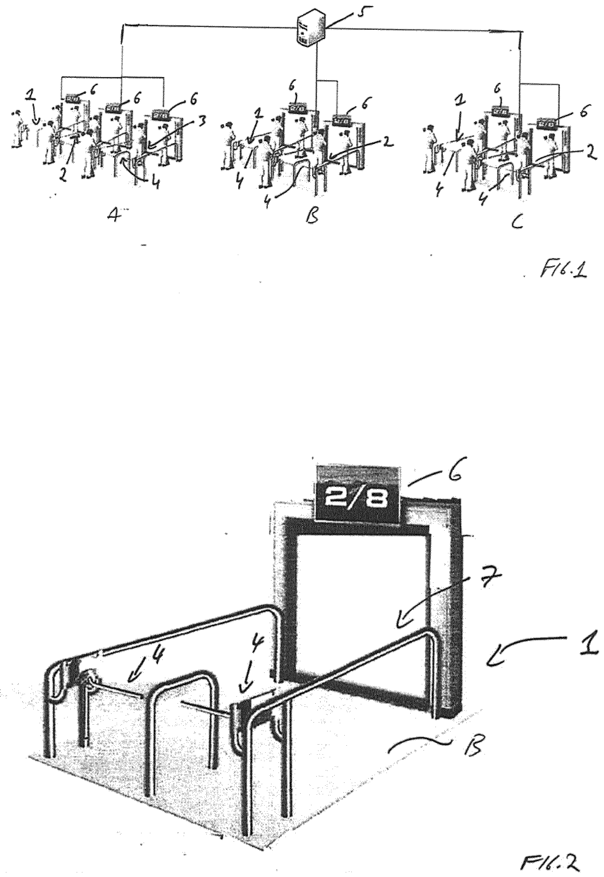

Gemäß der Erfindung und bezugnehmend auf Figur 1 wird der Einsteigebereich eines Transportmittels in zumindest zwei Schleusen unterteilt, deren maximale Personenkapazität jeweils der maximalen Kapazität des größten Transportmittels entspricht, das über den Einsteigebereich betretbar ist. Bei dem In Figur 1 gezeigten Beispiel sind drei örtlich festgelegte Einsteigebereiche A, B, C dargestellt, die jeweils unterschiedlichen Stationen der Transportmittel zugeordnet sind, wobei der Einsteigebereich A der Anfangsstation in drei Schleusen 1, 2, 3 unterteilt ist und die Einsteigebereiche B, C der Zwischenstationen in jeweils 2 Schleusen 1, 2 unterteilt sind.

Der Eintritt in die Schleusen 1, 2, 3 erfolgt jeweils über zumindest eine mit einem Steuersystem 5, beispielsweise einem Server, zum Zweck der Datenkommunikation verbundene Vereinzelungsvorrichtung 4, wobei kein Zutritt in die Schleuse 1, 2, 3 möglich ist, wenn eine für den aktuellen Einsteigevorgang von einem Steuersystem 5 vorgegebene Personenanzahl in der Schleuse 1, 2, 3 erreicht ist oder während die in der Schleuse 1, 2, 3 befindlichen Personen in ein Transportmittel einsteigen.

Die Schleusen 1, 2, 3 umfassen bei dem gezeigten Beispiel jeweils eine den in der Schleuse 1, 2, 3 befindlichen Personen und den den Zutritt ersuchenden Personen zugewandte und mit den Vereinzelungsvorrichtungen 4 und dem Steuersystem 5 zum Zweck der Datenkommunikation verbundene Anzeigevorrichtung 6, welche in Echtzeit die Anzahl der für den aktuellen Einsteigevorgang noch freien Plätze bezogen auf die vorgegebene Personenanzahl in der Schleuse 1, 2, 3 anzeigt. Ferner wird durch die Anzeigevorrichtung 6 angezeigt, ob noch auf den Einsteigevorgang gewartet werden muss oder ob gemäß den Signalen des Steuersystems 5 der Einsteigevorgang begonnen hat, wobei diese Informationen und auch eine Aufforderung zum Einsteigen beispielsweise durch Piktogramme angezeigt werden können.

Die Transportmittel weisen jeweils eine eineindeutige, für die Personen am Einsteigebereich deutlich sichtbare Identifikationsnummer oder sonstige Bezeichnung auf, wobei die in einer Schleuse 1, 2, 3 wartenden Passagiere über die Anzeigevorrichtung 6 entweder zum Warten oder zum Einsteigen in ein Transportmittel mit einer vorgegebenen Identifikationsnummer aufgefordert werden.

Über die Identifikationsnummer oder sonstige Bezeichnung und die Anzahl der Personen die sich in ein Transportmittel befinden, die anhand der Daten der Vereinzelungsvorrichtungen der Schleusen des Systems für den Einsteigevorgang in das Transportmittel im Steuersystem ermittelt werden, können die freie Kapazität und Ankunftszeit eines Transportmittels im Steuersystem 5 herangezogen werden, um in Abhängigkeit der Transportnachfrage in nachfolgenden Zwischenstationen vor einer Endstation, falls Zwischenstationen vorhanden sind, für einen aktuellen Einsteigevorgang in einem Einsteigebereich A, B, C eine Schleuse 1, 2, 3 und die vorgegebene Personenanzahl darin zu bestimmen und die Personen in dieser Schleuse einem ankommenden Transportmittel zuzuordnen. Die Transportmittel sind zum Zweck der Datenkommunikation mit dem Steuersystem verbunden, so dass deren Position, Identifikationsnummer und Auslastungsgrad bekannt sind. Zusätzliche Erfassungstechniken wie z.B. Kameras oder Infrarotsensoren sind zur Erfassung des aktuellen Gesamtstatus in die einzelnen Transportmittel optional integrierbar und liefern Echtzeitdaten an das Steuersystem 5.

Gemäß der Erfindung wird, wie bereits erläutert, die für den aktuellen Einsteigevorgang vorgegebene Personenanzahl in einer Schleuse 1, 2, 3 in Abhängigkeit der Transportnachfrage in nachfolgenden Zwischenstationen vor der Endstation, falls wie im gezeigten Beispiel Zwischenstationen vorhanden sind, und der freien Kapazität der ankommenden Transportmittel von dem Steuersystem 5 anhand vorgegebener Kriterien bestimmt, wobei für den aktuellen Einsteigevorgang die in einer Schleuse 1, 2, 3 befindlichen Personen einem ankommenden Transportmittel zugeordnet werden.

Im Steuersystem 5 kann die für den aktuellen Einsteigevorgang vorgegebene Personenanzahl für jede Schleuse 1, 2, 3 der Einsteigebereiche A, B, C anhand unterschiedlicher Kriterien bestimmt werden. Beispielsweise kann für den Fall, dass außer einer Anfangs- und einer Endstation zumindest eine Zwischenstation vorhanden ist, die Anzahl der in den unterschiedlichen Stationen wartenden Personen vor Erreichen der Schleusen 1, 2, 3 mittels geeigneter Vorrichtungen, die z.B. auch als Zugangskontrollvorrichtungen dienen können oder als Lichtschranken ausgeführt sind und mit dem Steuersystem 5 zum Zweck der Datenkommunikation verbunden sind, ermittelt werden, so dass die Transportnachfrage in den einzelnen Stationen im Steuersystem 5 in Echtzeit bekannt ist. Anhand der Transportnachfrage und der freien Kapazitäten kann im Steuersystem 5 mittels entsprechender Algorithmen die für den aktuellen Einsteigevorgang vorgegebene Personenanzahl für jede Schleuse 1, 2, 3 der Einsteigebereiche A, B, C bestimmt werden, wobei unterschiedliche Kriterien, wie z.B. Verkürzung der Wartezeit in einer oder in sämtlichen Zwischenstationen, Verkürzung der Wartezeit in der Anfangsstation oder Verkürzung der Wartezeit in der Station mit den meisten wartenden Personen etc. herangezogen werden können.

Die vorgegebene Personenanzahl in einer Schleuse 1, 2, 3 für den aktuellen Einsteigevorgang kann der maximalen Personenkapazität einer Schleuse entsprechen, z.B. dann, wenn das ankommende Transportmittel die gleiche Kapazität hat und leer ist und keine Zwischenstation vor der Endstation vorgesehen ist oder wenn keine Personen in den Zwischenstationen, falls vorhanden, warten.

Die aktuelle Anzahl der sich in einer Schleuse 1, 2, 3 befindenden Personen wird über die zumindest eine Vereinzelungsvorrichtung 4 erfasst und an das Steuersystem 5 weitergeleitet, wobei, wenn die für den aktuellen Einsteigevorgang vorgegebene Personenanzahl in der Schleuse 1, 2, 3 erreicht ist oder ein vorgegebener Timer, der einem vorgegebenen Zeitfenster entspricht, abgelaufen ist und ein Transportmittel ankommt, dem die aktuell in der Schleuse 1, 2, 3 befindlichen Personen zugeordnet sind, die Personen, die sich in der Schleuse 1, 2, 3 befinden, über die Anzeigevorrichtung 6 und optional durch akustische Signale zum Einsteigen aufgefordert werden und ein Zähler für die Personenanzahl in der Schleuse 1, 2, 3 auf Null gesetzt wird. Durch den Timer wird sichergestellt, dass insbesondere bei getaktet fahrenden Transportmitteln keine Beeinträchtigung des Betriebs verursacht wird.

Im Rahmen weiterer Varianten des Verfahrens ist es möglich, die Zuordnung der in einer Schleuse befindlichen Personen zu einem Transportmittel zu ändern, wenn die für den aktuellen Einsteigevorgang vorgegebene Personenanzahl in dieser Schleuse nicht, jedoch in einer anderen Schleuse des Einsteigebereichs erreicht ist, so dass die freie Kapazität der Transportmittel ausgeschöpft werden kann.

Für besondere Zwecke, wie z.B. Rollstuhl oder Kinderwagentransport, hat das Personal die Möglichkeit, in den einzelnen Stationen in den Programmablauf manuell einzugreifen bzw. zu übersteuern.

Bezugnehmend auf Figur 2 ist der dem Einsteigebereich zugewandte Bereich 7 einer Schleuse 1 des erfindungsgemäßen Systems offen. Alternativ kann am dem Einsteigebereich zugewandten Bereich der Schleusen 1, 2, 3 eine geeignete mit dem Steuersystem 5 zum Zweck der Datenkommunikation verbundene Vorrichtung, beispielsweise eine Schranke vorgesehen sein, die im Öffnungssinne betätigt den Zugang zu einem Transportmittel freigibt, wenn die in einer Schleuse 1 befindlichen Personen zum Einsteigen aufgefordert werden.

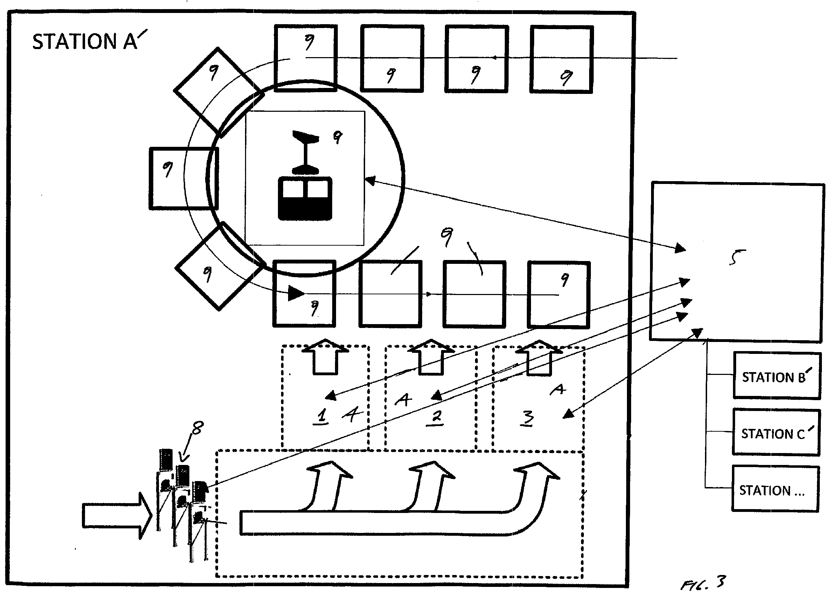

Eine bevorzugte Variante des erfindungsgemäßen Verfahrens wird anhand Figur 3 veranschaulicht. Hierbei ist mit dem Bezugszeichen A der Einsteigebereich einer Anfangsstation A' einer Gondelbahn mit Gondeln 9 bezeichnet, der in drei Schleusen 1, 2, 3 unterteilt ist. Die Schleusen 1, 2, 3 sind gemäß dem Beispiel nach Figur 2 ausgeführt und umfassen jeweils zumindest eine mit einem Steuersystem 5 zum Zweck der Datenkommunikation verbundene Vereinzelungsvorrichtung und jeweils eine den in einer Schleuse 1, 2, 3 befindlichen Personen und den den Zutritt ersuchenden Personen zugewandte und mit den Vereinzelungsvorrichtungen und dem Steuersystem 5 zum Zweck der Datenkommunikation verbundene Anzeigevorrichtung, welche die für den aktuellen Einsteigevorgang noch freien Plätze bezogen auf die vorgegebene Personenanzahl in der Schleuse 1, 2, 3 und den Status des Einsteigevorgangs anzeigt. In Figur 3 sind die Personenflüsse durch die Pfeile angedeutet.

Bei dem gezeigten Beispiel sind vor den Schleusen 1, 2, 3 Zugangskontrollvorrichtungen 8 vorgesehen, die bei gültiger Zugangsberechtigung im Öffnungssinne betätigt werden, um den Personen Zugang zu gewähren und über die die Anzahl der wartenden Personen vor Erreichen der Schleusen 1, 2, 3 in Verbindung mit den bereits transportierten bzw. unmittelbar zu transportierenden Personen im Einsteigebereich ermittelt werden.

Die Zugangskontrollvorrichtungen 8 sind mit dem Steuersystem 5 zum Zweck der Datenkommunikation verbunden. Anhand der Anzahl der gültigen Zugangsberechtigungen (die der Anzahl der ankommende Personen entspricht) und der Anzahl der von den Vereinzelungsvorrichtungen der Schleusen 1, 2, 3 erfassten Personen (die der Anzahl der bereits transportierten bzw. unmittelbar zu transportierenden Personen entspricht) ist somit jederzeit die Anzahl der vor den Schleusen 1, 2, 3 auf den Transport wartenden Personen bekannt.

Wenn im Rahmen weiterer Ausführungsformen die Vereinzelungsvorrichtungen 4 als Zugangskontrollvorrichtungen ausgeführt sind, können anstelle von Zugangskontrollvorrichtungen zur Ermittlung der Anzahl der vor den Schleusen 1, 2, 3 auf den Transport wartenden Personen weitere geeignete Vorrichtungen zur Ermittlung der Anzahl der vor den Schleusen 1, 2, 3 auf den Transport wartenden Personen, z.B. Lichtschranken oder Kameras eingesetzt werden, die die Anzahl der ankommenden Personen erfassen und an das Steuersystem 5 weiterleiten.

Die Zwischenstationen B', C' etc. sind analog zum in Figur 3 gezeigten Beispiel ausgestaltet, so dass im Steuersystem 5 in Echtzeit bekannt ist, wie viele Personen in welcher Station warten, wodurch die für den aktuellen Einsteigevorgang vorgegebene Personenanzahl für jede Schleuse der Einsteigebereiche A, B, C in Abhängigkeit der Transportnachfrage und der freien Kapazitäten anhand unterschiedlicher Kriterien, wie z.B. Verkürzung der Wartezeit in einer oder in sämtlichen Zwischenstationen, Verkürzung der Wartezeit in der Anfangsstation oder Verkürzung der Wartezeit in der Station mit den meisten wartenden Personen bestimmt werden kann.

Bei dem gezeigten Beispiel sind drei Schleusen 1, 2, 3 vorgesehen, wobei im Rahmen weiterer Ausgestaltungen 4 oder mehr Schleusen vorgesehen sein können, was die Flexibilität des Systems erhöht.

## Patentansprüche

1. Verfahren zur Erhöhung der Sicherheit im Einsteigebereich (A, B, C) und zur Optimierung der Ausnutzung der Kapazität bei Transportmitteln (9), welche zumindest einen örtlich festgelegten Einsteigebereich aufweisen, wobei der Einsteigebereich (A, B, C) eines Transportmittels (9) in zumindest zwei Schleusen (1, 2, 3) unterteilt wird, welche jeweils einen direkten Zugang zum Transportmittel aufweisen und deren maximale Personenkapazität jeweils der maximalen Kapazität des größten Transportmittels (9) entspricht, das über den Einsteigebereich (A, B, C) betretbar ist, wobei der Eintritt in die Schleusen (1, 2, 3) jeweils über zumindest eine mit einem Steuersystem (5) zum Zweck der Datenkommunikation verbundene Vereinzelungsvorrichtung (4) erfolgt und wobei kein Zutritt in eine Schleuse (1, 2, 3) möglich ist, wenn eine für den aktuellen Einsteigevorgang von dem Steuersystem (5) vorgegebene Personenanzahl in der Schleuse (1, 2, 3) erreicht ist oder während die in der Schleuse (1, 2, 3) befindlichen Personen in ein Transportmittel einsteigen, wobei die für den aktuellen Einsteigevorgang vorgegebene Personenanzahl in einer Schleuse (1, 2, 3) in Abhängigkeit der Transportnachfrage in nachfolgenden Zwischenstationen vor einer Endstation, falls Zwischenstationen vorhanden sind, und der freien Kapazität der ankommenden Transportmittel (9) von dem Steuersystem (5) bestimmt wird, wobei für den aktuellen Einsteigevorgang die in einer Schleuse (1, 2, 3) befindlichen Personen einem ankommenden Transportmittel (9) zugeordnet werden und wobei die aktuelle Anzahl der sich in einer Schleuse (1, 2, 3) befindenden Personen über die zumindest eine Vereinzelungsvorrichtung (4) erfasst und an das Steuersystem (5) weitergeleitet wird und wobei, wenn die für den aktuellen Einsteigevorgang vorgegebene Personenanzahl in der Schleuse (1, 2, 3) erreicht ist oder ein vorgegebener Timer, der einem vorgegebenen Zeitfenster entspricht, abgelaufen ist und ein Transportmittel (9) ankommt, dem die aktuell in der Schleuse (1, 2, 3) befindlichen Personen zugeordnet sind, die Personen, die sich in der Schleuse (1, 2, 3) befinden, zum Einsteigen aufgefordert werden und ein Zähler für die Personenanzahl in der Schleuse (1, 2, 3) auf Null gesetzt wird.

2. Verfahren zur Erhöhung der Sicherheit im Einsteigebereich (A, B, C) und zur Optimierung der Ausnutzung der Kapazität bei Transportmitteln (9) nach Anspruch 1, **dadurch gekennzeichnet, dass** die freie Kapazität und Ankunftszeit eines Transportmittels (9) im Steuersystem (5) anhand einer eineindeutigen, für die Personen am Einsteigebereich (A, B, C) deutlich sichtbaren Identifikationsnummer oder sonstigen Bezeichnung und der Anzahl der Personen die sich in ein Transportmittel (9) befinden, die anhand der Daten der Vereinzelungsvorrichtungen (4) der Schleusen (1, 2, 3) für den Einsteigevorgang in das Transportmittel (9) ermittelt wird, ausgewertet werden, um in Abhängigkeit der Transportnachfrage in nachfolgenden Zwischenstationen vor einer Endstation, falls Zwischenstationen vorhanden sind, für einen aktuellen Einsteigevorgang in einem Einsteigebereich (A, B, C) eine Schleuse (1, 2, 3) und die vorgegebene Personenanzahl darin zu bestimmen und die Personen in dieser Schleuse (1, 2, 3) einem ankommenden Transportmittel (9) zuzuordnen.

3. Verfahren zur Erhöhung der Sicherheit im Einsteigebereich (A, B, C) und zur Optimierung der Ausnutzung der Kapazität bei Transportmitteln (9) nach Anspruch 1 oder 2, **dadurch gekennzeichnet, dass** die Anzahl der für den aktuellen Einsteigevorgang noch freien Plätze bezogen auf die vorgegebene Personenanzahl in einer Schleuse (1, 2, 3) in Echtzeit und der Status des Einsteigevorgangs über eine den den Zutritt in die Schleuse (1, 2, 3) ersuchenden Personen und den in der Schleuse (1, 2, 3) befindlichen Personen zugewandte und mit dem Steuersystem (5) zum Zweck der Datenkommunikation verbundene Anzeigevorrichtung (6) angezeigt werden.

4. Verfahren zur Erhöhung der Sicherheit im Einsteigebereich (A, B, C) und zur Optimierung der Ausnutzung der Kapazität bei Transportmitteln (9) nach Anspruch 1, 2 oder 3, **dadurch gekennzeichnet, dass** für den Fall, dass außer einer Anfangs- und einer Endstation zumindest eine Zwischenstation vorhanden ist, die Anzahl der in den unterschiedlichen Stationen wartenden Personen vor Erreichen der Schleusen (1, 2, 3) mittels Vorrichtungen zur Ermittlung der Anzahl der vor den Schleusen (1, 2, 3) auf den Transport wartenden Personen, die mit dem Steuersystem (5) zum Zweck der Datenkommunikation verbunden sind, ermittelt wird, so dass im Steuersystem (5) die Transportnachfrage in den einzelnen Stationen in Echtzeit bekannt ist

5. Verfahren zur Erhöhung der Sicherheit im Einsteigebereich (A, B, C) und zur Optimierung der Ausnutzung der Kapazität bei Transportmitteln (9) nach Anspruch 4, **dadurch gekennzeichnet, dass** die Anzahl der in den unterschiedlichen Stationen wartenden Personen vor Erreichen der Schleusen (1, 2, 3) anhand der Anzahl der von den Vorrichtungen zur Ermittlung der Anzahl der vor den Schleusen (1, 2, 3) auf den Transport wartenden Personen erfassten, vor den Schleusen (1, 2, 3) ankommenden Personen und der Anzahl der von den Vereinzelungsvorrichtungen (4) der Schleusen (1, 2, 3) erfassten Personen, die der Anzahl der bereits transportierten bzw. unmittelbar zu transportierenden Personen entspricht, ermittelt wird oder dass die Anzahl der in den unterschiedlichen Stationen wartenden Personen vor Erreichen der Schleusen anhand der Auswertung von Kamerabildern ermittelt wird.

6. Verfahren zur Erhöhung der Sicherheit im Einsteigebereich (A, B, C) und zur Optimierung der Ausnutzung der Kapazität bei Transportmitteln (9) nach Anspruch 4 oder 5, **dadurch gekennzeichnet, dass** die für den aktuellen Einsteigevorgang vorgegebene Personenanzahl für jede Schleuse (1, 2, 3) der Einsteigebereiche (A, B, C) in Abhängigkeit der Transportnachfrage in nachfolgenden Zwischenstationen vor einer Endstation, falls Zwischenstationen vorhanden sind, und der freien Kapazität der ankommenden Transportmittel (9) anhand des Kriteriums der Verkürzung der Wartezeit in einer oder in sämtlichen Zwischenstationen, des Kriteriums der Verkürzung der Wartezeit in der Anfangsstation oder des Kriteriums der Verkürzung der Wartezeit in der Station mit den meisten wartenden Personen bestimmt wird.

7. System zur Erhöhung der Sicherheit im Einsteigebereich (A, B, C) und zur Optimierung der Ausnutzung der Kapazität bei Transportmitteln (9), welche zumindest einen örtlich festgelegten Einsteigebereich aufweisen, zur Durchführung des Verfahrens nach einem der vorangehenden Ansprüche, umfassend pro Einsteigebereich (A, B, C) eines Transportmittels (9) zumindest zwei Schleusen (1, 2, 3), welche jeweils einen direkten Zugang zum Transportmittel aufweisen und deren maximale Personenkapazität jeweils der maximalen Kapazität des größten Transportmittels (9) entspricht, das über den Einsteigebereich (A, B, C) betretbar ist, wobei die Schleusen (1, 2, 3) jeweils zumindest eine mit einem Steuersystem (5) zum Zweck der Datenkommunikation verbundene Vereinzelungsvorrichtung (4) umfassen, über die der Zutritt in die Schleuse (1, 2, 3) erfolgt und die die aktuelle Anzahl der sich in einer Schleuse (1, 2, 3) befindenden Personen erfasst und an das Steuersystem (5) weiterleitet und wobei kein Zutritt in eine Schleuse (1, 2, 3) möglich ist, wenn eine für den aktuellen Einsteigevorgang von dem Steuersystem (5) vorgegebene Personenanzahl in der Schleuse (1, 2, 3) erreicht ist, wobei die für den aktuellen Einsteigevorgang vorgegebene Personenanzahl in einer Schleuse (1, 2, 3) in Abhängigkeit der Transportnachfrage in nachfolgenden Zwischenstationen vor einer Endstation, falls Zwischenstationen vorhanden sind, und der freien Kapazität der ankommenden Transportmittel (9) von dem Steuersystem (5) bestimmt wird, wobei die Schleusen jeweils eine mit dem Steuersystem (5) zum Zweck der Datenkommunikation verbundene Anzeigevorrichtung (6) aufweisen, über die die Anzahl der für den aktuellen Einsteigevorgang noch freien Plätze bezogen auf die vorgegebene Personenanzahl in einer Schleuse (1, 2, 3) und der Status des Einsteigevorgangs angezeigt werden, wobei die in einer Schleuse (1, 2, 3) wartenden Passagiere über die Anzeigevorrichtung (6) entweder zum Warten oder zum Einsteigen in ein Transportmittel (9) aufgefordert werden.

8. System zur Erhöhung der Sicherheit im Einsteigebereich (A, B, C) und zur Optimierung der Ausnutzung der Kapazität bei Transportmitteln (9) nach Anspruch 7, **dadurch gekennzeichnet, dass** die Vereinzelungsvorrichtungen (4) auch als Zugangskontrollvorrichtungen für die Transportmittel (9) dienen.

9. System zur Erhöhung der Sicherheit im Einsteigebereich (A, B, C) und zur Optimierung der Ausnutzung der Kapazität bei Transportmitteln (9) nach Anspruch 7, **dadurch gekennzeichnet, dass** es für den Fall, dass außer einer Anfangs- und einer Endstation zumindest eine Zwischenstation vorhanden ist, zur Ermittlung der Anzahl der vor den Schleusen (1, 2, 3) wartenden Personen mit dem Steuersystem (5) zum Zweck der Datenkommunikation verbundene Vorrichtungen vorgesehen sind, welche die Anzahl der vor den Schleusen (1, 2, 3) ankommenden Personen erfassen, wobei anhand der Anzahl der ankommenden Personen und der Anzahl der von den Vereinzelungsvorrichtungen (4) der Schleusen (1, 2, 3) erfassten Personen, die der Anzahl der bereits transportierten bzw. unmittelbar zu transportierenden Personen entspricht, im Steuersystem (5) die Anzahl der in den unterschiedlichen Stationen wartenden Personen vor Erreichen der Schleusen ermittelt wird.

10. System zur Erhöhung der Sicherheit im Einsteigebereich (A, B, C) und zur Optimierung der Ausnutzung der Kapazität bei Transportmitteln (9) nach Anspruch 9, **dadurch gekennzeichnet, dass** die Vorrichtungen zur Ermittlung der Anzahl der vor den Schleusen (1, 2, 3) wartenden Personen als Zugangskontrollvorrichtungen (8), Lichtschranken oder Kameras ausgeführt sind.

11. System zur Erhöhung der Sicherheit im Einsteigebereich (A, B, C) und zur Optimierung der Ausnutzung der Kapazität bei Transportmitteln (9) nach Anspruch 7, 8, 9 oder 10, **dadurch gekennzeichnet, dass** der dem Einsteigebereich (A, B, C) zugewandte Bereich (7) der Schleusen (1, 2, 3) offen ist oder dass am dem Einsteigebereich zugewandten Bereich der Schleusen (1, 2, 3) eine mit dem Steuersystem (5) zum Zweck der Datenkommunikation verbundene Vorrichtung vorgesehen ist, die im Öffnungssinne betätigt den Zugang zu einem Transportmittel (9) freigibt, wenn die in der Schleuse (1, 2, 3) befindlichen Personen zum Einsteigen aufgefordert werden.

## Claims

1. Method to increase the safety in boarding areas (A, B, C) and to optimize the utilization of capacity for transport means (9) that comprise at least one designated boarding area, wherein the boarding area (A, B, C) of a transport means (9) is divided into at least two ports (1, 2, 3), which each comprise a direct access to the transport means, and the maximum passenger capacity of which each corresponds to the maximum capacity of the largest transport means (9), which can be entered via the boarding area (A, B, C), wherein the entry into the ports (1, 2, 3) takes place via at least one separating apparatus (4) connected to a control system (5) for the purpose of data communication and wherein no entry into a port (1, 2, 3) is possible if a passenger number in the port (1, 2, 3) specified by the control system (5) for the current boarding process has been reached or while the passengers located in the port (1, 2, 3) are boarding the transport means, wherein the passenger number specified in a port (1, 2, 3) for the boarding process and the free capacity of the incoming transport means (9) is determined by the control system (5) depending on the transport demand in the following intermediate stations prior to a terminal station, provided that there are intermediate stations, wherein the passengers located in a port (1, 2, 3) are allocated to an incoming transport means (9) for the current boarding process and wherein the current number of passengers located in a port (1, 2, 3) are detected by the at least one separating apparatus (4) and this is transmitted to the control system (5) and wherein, if the passenger number in the port (1, 2, 3) specified for a boarding process has been reached or a specified timer, which corresponds to a specified time window, has elapsed and a transport means (9) arrives, to which the passengers currently located in the port (1, 2, 3) are allocated, the passengers which are located in the port (1, 2, 3) are requested to board and a counter for the passenger number in the port (1, 2, 3) is set to zero.

2. Method to increase the security in the boarding area (A, B, C) and to optimize the utilization of capacity for transport means (9) according to claim 1, **characterized in that** the free capacity and the arrival time of a transport means (9) are evaluated within the control system (5) based on a clear identification number or other reference, which is clearly visible to passengers and the number of passengers located in a transport means (9), which is determined for the boarding process into the transport means (9) based on the data of the separating apparatuses (4) of the ports (1, 2, 3) in order to determine a port (1, 2, 3) and the specified passenger number in it for a current boarding process in a boarding area (A, B, C) depending on the transport demand in the following intermediate stations prior to a terminal station, provided that there are intermediate stations, and to allocate the passengers in this port (1, 2, 3) to an incoming transport means (9) .

3. Method to increase the security in the boarding area (A, B, C) and to optimize the utilization of capacity for transport means (9) according to claim 1 or 2, **characterized in that** the number of places for the current boarding process that are still free in relation to the specified passenger number in a port (1, 2, 3) and the status of the boarding process are displayed by a display device (6) connected to the control system (5) for the purpose of data communication and facing the passengers requesting access to the port (1, 2, 3) and passengers located in the port (1, 2, 3).

4. Method to increase the security in the boarding area (A, B, C) and to optimize the utilization of capacity for transport means (9) according to claims 1, 2 or 3, **characterized in that**, for the case that there is at least one intermediate station except an initial station and a terminal station, the number of passengers waiting at the different stations is determined before reaching the ports (1, 2, 3) by means of apparatuses to determine the number of the passengers waiting for transport in front of the ports (1, 2, 3), which are connected to the control system (5) for the purpose of data communication so that the transport demand at the individual stations is known in real time within the control system (5).

5. Method to increase the security in the boarding area (A, B, C) and to optimize the utilization of capacity for transport means (9) according to claim 4, **characterized in that** the number of the passengers waiting at the different stations before reaching the ports (1, 2, 3) is determined based on the number of people detected by the apparatuses for determining the number of the passengers waiting for transport in front of the ports (1, 2, 3), arriving in front of the ports (1, 2, 3), and the number of passengers detected by the separating apparatuses (4) of the ports (1, 2, 3), which corresponds to the number of passengers that have already been transported or are to be immediately transported or that the number of passengers waiting at the different stations prior to reaching the ports is determined based on the evaluation of camera images.

6. Method to increase the security in the boarding area (A, B, C) and to optimize the utilization of capacity for transport means (9) according to claim 4 or 5, **characterized in that** the passenger number specified for the current boarding process is determined for each port (1, 2, 3) of the boarding areas (A, B, C) depending on the transport demand in the following intermediate stations prior to a terminal station, provided that there are intermediation stations, and the free capacity of the incoming transport means (9) is determined based on the criterion of shortening the waiting time at one or at all intermediate stations, on the criterion of shorting the waiting time at the initial station or on the criterion of shortening the waiting time at the station with the most passengers waiting.

7. Method to increase the security in the boarding area (A, B, C) and to optimize the utilization of capacity for transport means (9), which comprise at least one designated boarding area, to carry out the method according to one of the preceding claims, comprising at least two ports (1, 2, 3) for each boarding area (A, B, C) of a transport means (9) and maximum passenger capacity of which respectively corresponds to the maximum capacity of the largest transport means (9), which can be entered via the boarding area (A, B, C), wherein the ports (1, 2, 3) comprise at least one separating apparatus (4) connected to a control system (5) for the purpose of data communication, via which the access into the port (1, 2, 3) takes place and which detects the current number of passengers located in a port (1, 2, 3) and transmits this to the control system (5), and wherein no entry into a port (1, 2, 3) is possible if a passenger number specified by the control system (5) for the current boarding process in the port (1, 2, 3) has been reached, wherein the passenger number specified for the current boarding process in a port (1, 2, 3) is determined depending on the transport demand in the following intermediate stations prior to a terminal station, provided that there are intermediate stations, and the free capacity of the incoming transport means (9) is determined by the control system (5), wherein the ports each comprise a display apparatus (6) connected to the control system (5) for the purpose of data communication, via which the number of spaces that are still free for the current boarding process with respect to the specified passenger number in a port (1, 2, 3) and the status of the boarding process is displayed, wherein the passengers waiting in a port (1, 2, 3) are requested to either wait or to board into a transport means (9) via the display apparatus (6).

8. System to increase the security in the boarding area (A, B, C) and to optimize the utilization of capacity for transport means (9) according to claim 7, **characterized in that** the separating apparatuses (4) also serve as access control apparatuses for the transport means (9).

9. System to increase the security in the boarding area (A, B, C) and to optimize the utilization of capacity for transport means (9) according to claim 7, **characterized in that**, in the event that there is at least one intermediate station except for an initial or a terminal station, in order to determine the number of passengers waiting in front of the ports (1, 2, 3), apparatuses connected to the control system (5) for the purpose of data communication are provided, which detect the number of passengers arriving in front of the ports (1, 2, 3), wherein, based on the number of arriving passengers and the number of passengers detected by the separating apparatuses (4) of the ports (1, 2, 3), which corresponds to the number of the passengers that have already been transported or are to be immediately transported, the number of passengers waiting in the different stations is determined in the control system (5) before reaching the ports.

10. System to increase the security in the boarding area (A, B, C) and to optimize the utilization of capacity for transport means (9) according to claim 9, **characterized in that** the apparatuses to determine the number of passengers waiting in front of the ports (1, 2, 3) are designed as access control apparatuses (8), light barriers or cameras.

11. Method to increase the security in the boarding area (A, B, C) and to optimize the utilization of capacity for transport means (9) according to claims 7, 8, 9 or 10, **characterized in that** the area (7) of the ports (1, 2, 3) facing the boarding area (A, B, C) is open or that an apparatus that is connected to the control system (5) for the purpose of data communication is provided at the area of the ports (1, 2, 3) facing the boarding area, which, activated in term of opening, releases access to a transport means (9) if the passengers located in the port (1, 2, 3) are requested to board.

## Revendications

1. Procédé, destiné à augmenter la sécurité dans la zone de montée à bord (A, B, C) et à optimiser l'exploitation de la capacité de moyens de transport (9), lesquels comportent au moins une zone de montée à bord localement stationnaire, lors duquel on divise la zone de montée à bord (A, B, C) d'un moyen de transport (9) en au moins deux sas (1, 2, 3), lesquels comportent chacun un accès direct au moyen de transport et dont la capacité maximale en personnes correspond respectivement à la capacité maximale des plus grands moyens de transport (9), qui est accessible via la zone de montée à bord (A, B, C), l'entrée dans le sas (1, 2, 3) s'effectuant respectivement via au moins un dispositif d'isolement (4) connecté sur un système de commande (5) à des fins de communication de données et aucun accès dans un sas (1, 2, 3) n'étant possible, dès qu'un nombre de personnes prédéfini par le système de commande (5) pour le processus de montée à bord actuel est atteint dans le sas (1, 2, 3) ou pendant que les personnes qui se trouvent dans le sas (1, 2, 3) montent à bord d'un moyen de transport, le nombre de personnes prédéfini pour le processus de montée à bord actuel dans le sas (1, 2, 3) étant déterminé par le système de commande (5) en fonction de la demande de transport dans des stations intermédiaires suivantes en amont d'un terminus, si des stations intermédiaires existent, et de la capacité libre de moyens de transport (9) qui arrivent, pour le processus de montée à bord actuel, les personnes se trouvant dans un sas (1, 2, 3) étant affectées à un moyen de transport (9) qui arrive et le nombre actuel de personnes se trouvant dans un sas (1, 2, 3) étant détecté via l'au moins un dispositif d'isolement (4) et retransmis au système de commande (5) et lorsque le nombre de personne prédéfini pour le processus de montée à bord est atteint dans le sas (1, 2, 3) ou lorsqu'une minuterie prédéfinie qui correspond à une fenêtre de temps prédéfinie est écoulée et si un moyen de transport (9) arrive auquel les personnes se trouvant actuellement dans le sas (1, 2, 3) sont affectées, les personnes qui se trouvent dans le sas (1, 2, 3) étant invitées à monter à bord et un compteur pour le nombre de personnes dans le sas (1, 2, 3) étant remis à zéro.

2. Procédé, destiné à augmenter la sécurité dans la zone de montée à bord (A, B, C) et à optimiser l'exploitation de la capacité de moyens de transport (9) selon la revendication 1, **caractérisé en ce que** la capacité libre et l'heure d'arrivée d'un moyen de transport (9) sont évaluées dans le système de commande (5) à l'aide d'un numéro d'identification univoque, nettement visible pour les personnes dans la zone de montée à bord (A, B, C) ou par une désignation d'autre nature et du nombre de personnes qui se trouvent dans un moyen de transport (9) qui est déterminé à l'aide des données des dispositifs d'isolement (4) des sas (1, 2, 3) pour le processus de montée à bord dans le moyen de transport (9), pour déterminer un sas (1, 2, 3) et le nombre de personnes qui s'y trouvent en fonction de la demande de transport dans des stations intermédiaires suivantes en amont d'un terminus, si des stations intermédiaires existent, pour un processus de montée à bord actuel dans une zone de montée à bord (A, B, C) et pour affecter les personnes qui se trouvent dans ledit sas (1, 2, 3) à un moyen de transport (9) qui arrive.

3. Procédé, destiné à augmenter la sécurité dans la zone de montée à bord (A, B, C) et à optimiser l'exploitation de la capacité de moyens de transport (9) selon la revendication 1 ou 2, **caractérisé en ce que** le nombre de places encore libres pour le processus actuel de montée à bord, rapporté au nombre de personnes prédéfini dans un sas (1, 2, 3) est affiché en temps réel et le statut du processus de montée à bord est affiché via un dispositif d'affichage (6) qui fait face aux personnes cherchant à accéder au sas (1, 2, 3) et aux personnes se trouvant dans le sas (1, 2, 3) et qui est connecté sur le système de commande (5) à des fins de communication de données.

4. Procédé, destiné à augmenter la sécurité dans la zone de montée à bord (A, B, C) et à optimiser l'exploitation de la capacité de moyens de transport (9) selon la revendication 1, 2 ou 3, **caractérisé en ce que** dans le cas, où à l'exception d'une station de tête et d'un terminus, il existe au moins une station intermédiaire, le nombre de personnes qui attendent dans les différentes stations avant d'atteindre le sas (1, 2, 3) est déterminé au moyen de dispositifs de détermination du nombre de personnes attendant le transport en amont du sas (1, 2, 3) qui sont connectés sur le système de commande (5) à des fins de communication de données, de sorte que dans le système de commande (5), la demande de transport dans chacune des stations soit connue en temps réel.

5. Procédé, destiné à augmenter la sécurité dans la zone de montée à bord (A, B, C) et à optimiser l'exploitation de la capacité de moyens de transport (9) selon la revendication 4, **caractérisé en ce que** le nombre de personnes qui attendent dans les différentes stations avant d'atteindre le sas (1, 2, 3) est déterminé à l'aide du nombre de personnes attendant le transport en amont du sas (1, 2, 3), détecté par les dispositifs de détermination du nombre de personnes attendant le transport, arrivant en amont du sas (1, 2, 3) et du nombre de personnes détectées par les dispositifs d'isolement (4) des sas (1, 2, 3) qui correspond au nombre de personnes déjà transportées ou qui doivent être transportées immédiatement, ou **en ce que** le nombre des personnes attendant dans les différentes stations avant d'atteindre le sas est déterminé à l'aide de l'évaluation par des images de caméra.

6. Procédé, destiné à augmenter la sécurité dans la zone de montée à bord (A, B, C) et à optimiser l'exploitation de la capacité de moyens de transport (9) selon la revendication 4 ou 5, **caractérisé en ce que** le nombre de personnes prédéfini pour le processus de montée à bord actuel pour chaque sas (1, 2, 3) des zones de montée à bord (A, B, C) est déterminé en fonction de la demande de transport dans des stations intermédiaires suivantes en amont d'un terminus, si des stations intermédiaires existent et de la capacité libre des moyens de transport (9) qui arrivent, à l'aide du critère de la réduction du temps d'attente dans une ou dans l'ensemble des stations intermédiaires, du critère de la réduction du temps d'attente dans la station de tête ou du critère de la réduction du temps d'attente dans la station comprenant le plus grand nombre de personnes en attente.

7. Système, destiné à augmenter la sécurité dans la zone de montée à bord (A, B, C) et à optimiser l'exploitation de la capacité de moyens de transport (9), lequel comporte au moins une zone de montée à bord localement stationnaire, destinée à réaliser le procédé selon l'une quelconque des revendications précédentes, comprenant par zone de montée à bord (A, B, C) d'un moyen de transport (9) au moins deux sas (1, 2, 3), lesquels comportent chacun un accès direct au moyen de transport et dont la capacité maximale de personnes correspond respectivement à la capacité maximale des plus grands moyens de transport (9), qui est accessible via la zone de montée à bord (A, B, C), les sas (1, 2, 3) comprenant chacun au moins un dispositif d'isolement (4) connecté sur le système de commande (5) à des fins de communication de données, par l'intermédiaire duquel s'effectue l'accès dans le sas (1, 2, 3) et qui détecte le nombre des personnes qui se trouvent dans un sas (1, 2, 3) et le retransmet au système de commande (5) et aucun accès à un sas (1, 2, 3) n'étant possible si un nombre de personnes dans le sas (1, 2, 3), prédéfini par le système de commande (5) pour le processus de montée à bord actuel est atteint, le nombre de personnes dans un sas (1, 2, 3) prédéfini pour le processus de montée à bord actuel étant déterminé par le système de commande (5) en fonction de la demande de transport dans des stations intermédiaires suivantes en amont d'un terminus, si des stations intermédiaires existent, et de la capacité libre des moyens de transport (9) qui arrivent, les sas comportant chacun un dispositif d'affichage (6) connecté sur le système de commande (5) à des fins de communication de données, par l'intermédiaire duquel le nombre des places encore libres pour le processus de montée à bord actuel, en rapport au nombre de personnes prédéfini dans un sas (1, 2, 3) et le statut du processus de montée à bord sont affichés, les passagers qui attendent dans un sas (1, 2, 3) étant invités par l'intermédiaire du dispositif d'affichage (6) soit à attendre ou à monter à bord d'un moyen de transport (9).

8. Système, destiné à augmenter la sécurité dans la zone de montée à bord (A, B, C) et à optimiser l'exploitation de la capacité de moyens de transport (9) selon la revendication 7, **caractérisé en ce que** les dispositifs d'isolement (4) servent également de dispositifs de contrôle d'accès pour les moyens de transport (9).

9. Système, destiné à augmenter la sécurité dans la zone de montée à bord (A, B, C) et à optimiser l'exploitation de la capacité de moyens de transport (9) selon la revendication 7, **caractérisé en ce que** dans le cas, où à l'exception d'une station de tête et d'un terminus, il existe au moins une station intermédiaire, pour déterminer le nombre de personnes qui attendent en amont du sas (1, 2, 3) des dispositifs connectés avec le système de commande (5) à des fins de communication de données sont prévus, lesquels détectent le nombre des personnes qui arrivent en amont du sas (1, 2, 3), à l'aide du nombre de personnes qui arrivent et du nombre des personnes détectées par les dispositifs d'isolement (4) des sas (1, 2, 3) qui correspond au nombre de personnes déjà transportées ou qui doivent être transportées immédiatement, le nombre des personnes qui attendent dans les différentes stations, avant d'atteindre les sas est déterminé dans le système de commande (5).

10. Système, destiné à augmenter la sécurité dans la zone de montée à bord (A, B, C) et à optimiser l'exploitation de la capacité de moyens de transport (9) selon la revendication 9, **caractérisé en ce que** les dispositifs destinés à déterminer le nombre de personnes qui attendent en amont du sas (1, 2, 3) sont réalisés sous la forme de dispositifs de contrôle d'accès (8), de barrières photo-électriques ou de caméras.

11. Système, destiné à augmenter la sécurité dans la zone de montée à bord (A, B, C) et à optimiser l'exploitation de la capacité de moyens de transport (9) selon la revendication 7, 8, 9 ou 10, **caractérisé en ce que** la zone (7) des sas (1, 2, 3) qui fait face à la zone de montée à bord (A, B, C) est ouverte ou **en ce que** sur la zone des sas (1, 2, 3) qui fait face à la zone de montée à bord est prévu un dispositif connecté avec le système de commande (5) à des fins de communication de données, qui lorsqu'il est actionné dans le sens d'une ouverture, libère l'accès à un moyen de transport (9) lorsque les personnes qui se trouvent dans les sas (1, 2, 3) sont invitées à monter à bord.
